# EUROPÄISCHE PATENTSCHRIFT

(11) **EP 3 181 426 B1**
(45) Veröffentlichungstag und Bekanntmachung des Hinweises auf die Patenterteilung: **05.09.2018**
(21) Anmeldenummer: 16203345.0
(22) Anmeldetag: 12.12.2016
(51) Int. Cl.: B61D 17/20, B60D 5/00, B60N 2/24, B60N 2/015, B60N 2/30, B61D 33/00

(54) **VERFAHREN ZUR OPTIMIERTEN ANORDNUNG VON SITZFLÄCHEN ZUR KAPAZITÄTSNEUTRALEN KOMFORTVERBESSERUNG FÜR PASSAGIERE IN FAHRZEUGEN MIT GELENKBEREICHEN UND FAHRZEUG MIT EINEM GELENKBEREICH UND EINER OPTIMIERTEN ANORDNUNG VON SITZFLÄCHEN**
METHOD FOR OPTIMAL ARRANGEMENT OF SEATS FOR CAPACITY-NEUTRAL IMPROVEMENT OF COMFORT FOR PASSENGERS IN VEHICLES WITH ARTICULATED AREAS AND VEHICLE WITH AN ARTICULATED AREA AND AN OPTIMAL ARRANGEMENT OF SEATS
PROCÉDÉ DESTINÉ À OPTIMISER LA DISPOSITION DE SIÈGES POUR AMÉLIORER LE CONFORT DES PASSAGERS, SANS AFFECTER LA CAPACITÉ, DANS DES VÉHICULES COMPRENANT DES ZONES ARTICULÉES ET VÉHICULE COMPRENANT UNE ZONE ARTICULÉE ET UNE DISPOSITION OPTIMISÉE DE SIÈGES

(30) Priorität: 14.12.2015 DE 102015225081
(43) Veröffentlichungstag der Anmeldung: 21.06.2017
(73) Patentinhaber: Bombardier Transportation GmbH, 10785 Berlin (DE)
(72) Erfinder: Pramper, Rainer, 1100 Wien (AT); Monarth, Andreas, 1090 Wien (AT)
(74) Vertreter: Köckeritz, Günter

(56) Entgegenhaltungen:
- EP-B1- 1 704 080
- FR-A1- 2 581 016
- US-A1- 2014 368 012

## Beschreibung

Die Erfindung betrifft ein Verfahren zur optimierten Anordnung von Sitzflächen zur kapazitätsneutralen Komfortverbesserung für Passagiere in Fahrzeugen mit Gelenkbereichen und eine Anordnung für wenigstens einen Sitz in Fahrzeugen mit wenigstens einem Gelenkbereich sowie ein Fahrzeug mit wenigstens einem Gelenkbereich und im Gelenkbereich angeordneten Sitzmöglichkeiten. Die Erfindung dient der Schaffung von optimierten Sitzpositionen, insbesondere von Klappsitzposition zur kapazitätsneutralen Komfortverbesserung für Passagiere in Fahrzeugen mit Gelenkbereichen.
Die Fahrzeuge des öffentlichen Verkehrs müssen für die spezifischen Kundenbedürfnisse immer weiter optimiert werden. Einerseits stehen dabei wirtschaftliche Punkte im Vordergrund wie Kostenreduktion optimaler Ressourceneinsatz und möglichst hohe Transportkapazitäten, andererseits sollen aber auch die Bedürfnisse der Passagiere berücksichtigt werden wie kurze und schnelle Fahrzeiten und mehr Komfort für die Passagiere.
Die Anordnung von Sitzflächen in Gelenkbereichen von Fahrzeugen mit Gelenkbereichen ist bereits bekannt.

In der DE 44 42 368 A1 wird beispielsweise ein Gelenkfahrzeug offenbart, in welchem Gelenkbereiche in Form von Bälgen zwischen jeweils zwei nebeneinander angeordneten Wagenkastenteilen vorhanden sind, wobei an den Seitenwänden der Wagenkastenteile neben solchen Gelenkbereichen Klappsitze eingesetzt werden.

In der GB 689147 wird beispielsweise ein Gelenkfahrzeug offenbart, in dessen Gelenkbereich Sitze angeordnet sind. Die hier im Gelenkbereich angeordneten Sitze verkleinern die im Bedarfsfall erforderliche Bodenfläche im Fahrzeug und verringern damit die Stehplatzfläche. Die Transportkapazität des Fahrzeuges wird dadurch erheblich eingeschränkt und bei Bogenfahrten wird die Durchgangsbreite durch die eindrehenden Sitze verringert.
In der EP 1704080 B1 wird ein Gelenk-Passagierfahrzeug beschrieben, welches mit in einem flexiblen Fahrzeugaufbauabschnitt angeordneten Sitzen versehen ist. Die hier im flexiblen Fahrzeugaufbauabschnitt angeordneten Sitze verkleinern die im Bedarfsfall erforderliche Bodenfläche im Fahrzeug und verringern damit die Stehplatzfläche. Die Transportkapazität und die Durchgangsbreite des Fahrzeuges werden dadurch erheblich eingeschränkt bzw. verringert.

Die Aufgabe der vorliegenden Erfindung besteht darin, die Nachteile der aus dem Stand der Technik bekannten Lehren zu überwinden. Die wirtschaftlichen und Komfortbedürfnisse sollen durch dabei die Erfindung berücksichtigt werden.
Erfindungsgemäß wird diese Aufgabe durch die Merkmale der unabhängigen Ansprüche 1 und 5 gelöst. Vorteilhafte Weiterbildungen der Erfindung sind in den jeweils zugehörigen abhängigen Ansprüchen enthalten. Demnach umfasst die Erfindung ein Verfahren zur optimierten Anordnung von Sitzflächen zur kapazitätsneutralen Komfortverbesserung für Passagiere in Fahrzeugen mit Gelenkbereichen, wobei die Gelenkbereiche jeweils zwischen zwei Wagenkastenteilen des Fahrzeuges angeordnet sind, wobei zur optimierten Anordnung von Sitzflächen Klappsitze eingesetzt werden, die an den Seitenwänden der Gelenkbereiche des Fahrzeuges angeordnet werden und dabei so positioniert werden, dass die Klappsitze im eingeklappten Zustand die Stehplatzfläche und die Durchgangsbreite in diesem Bereich nicht verringern.

Durch die gemäß dem erfinderischen Verfahren mögliche optimierte Anordnung von zusätzlichen Sitzflächen, d.h., von Klappsitzen sowie deren geschickter Positionierung, wird eine Verkleinerung der Stehplatzfläche und damit der Transportkapazität verhindert. Gleichzeitig wird im Bedarfsfall der Fahrgastkomfort erhöht, da mehr Sitzplätze zur Verfügung stehen. Vorteilhaft werden die zusätzlichen Klappsitze im Gelenkbereich an den Endportalen des Wagenkastens angebunden und so positioniert, dass die eingeklappten Sitze an der Seite der Gelenksabdeckung positioniert sind. Nach einem besonderen Merkmal der Erfindung werden die Klappsitze direkt oder über eine Montageplatte an einem der Endportale der Wagenkästen fixiert.
Vorzugsweise wird eine Montageplatte an das Endportal mittels Verschraubung montiert. Dabei werden vorteilhaft mindestens 3 Verschraubungen eingesetzt, zur Erhöhung der Stabilität (3-Punkt oder Dreiecksmontage erhöht die Stabilität). Zum Umfang der Erfindung gehört auch ein Fahrzeug zur Beförderung von Personen mit einem zwischen zwei Wagenkästen angeordneten Gelenkbereich, wobei im Gelenkbereich Sitze vorgesehen sind, die als Klappsitze ausgebildet sind und an den Seitenwänden der Gelenksbereiche angeordnet sind, wobei die Klappsitze im eingeklappten Zustand die Stehplatzfläche und die Durchgangsbreite in diesem Bereich nicht verringern. Vorteilhaft ist vorgesehen, dass die Klappsitze an einem der Endportale der Wagenkastenteile montiert sind. Nach einem weiteren Merkmal sind die Klappsitze direkt oder mittels einer Montageplatte an einem der Endportale der Wagenkästen befestigt. Bevorzugt ist vorgesehen, dass die Klappsitze direkt oder mittels einer Montageplatte mit einem der Endportale der Wagenkästen verschraubt sind, vorzugsweise mittels einer 3-Punkt-Verschraubung oder einer Dreiecksmontage. Die vorgeschlagene Lösung ist auch für eine Nachrüstung in allen Fahrzeugen mit Gelenkbereichen geeignet und kann auch leicht wieder zurückgebaut werden.

Dabei werden insbesondere Klappsitze in Bereichen des Fahrzeuges positioniert, wo keine zusätzlichen Bodenflächen durch die Anbringung eines Sitzes überdeckt werden. Bei diesen Bereichen handelt es sich insbesondere um Gelenkbereiche.

Ausführungsbeispiele der Erfindung werden unter Bezugnahme auf die beigefügte Zeichnung beschrieben. Die einzelnen Figuren der Zeichnung zeigen:
- Fig. 1: Darstellung des Gelenkbereiches zwischen zwei Wagenkästen eines Fahrzeuges in einer Querschnittansicht,
- Fig. 2: Darstellung des Gelenkbereiches zwischen zwei Wagenkästen eines Fahrzeuges in einem Längsschnitt,
- Fig. 3: Darstellung des Gelenkbereiches zwischen zwei Wagenkästen eines Fahrzeuges in einer Draufsicht auf das Fahrzeuginnere im Gelenkbereich,
- Fig. 4: Detailansicht auf einen Klappsitz im Gelenkbereich eines Fahrzeuges,
- Fig. 5: Darstellung des Gelenkbereiches zwischen zwei Wagenkästen eines Fahrzeuges in einer Draufsicht auf das Fahrzeuginnere im Gelenkbereich bei einer Kurvenbewegung des Balges.
- Fig. 6a: montierter Klappsitz
- Fig. 6b: montierter Klappsitz

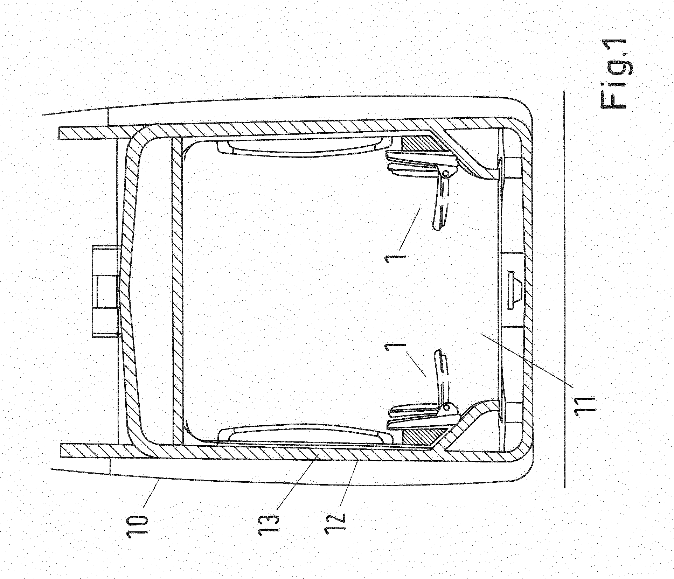

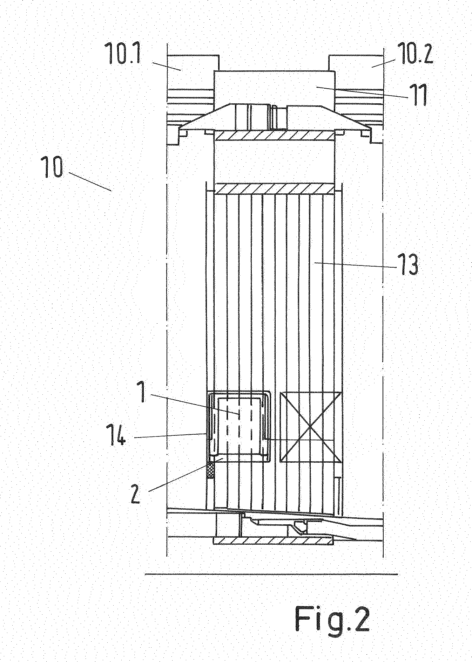

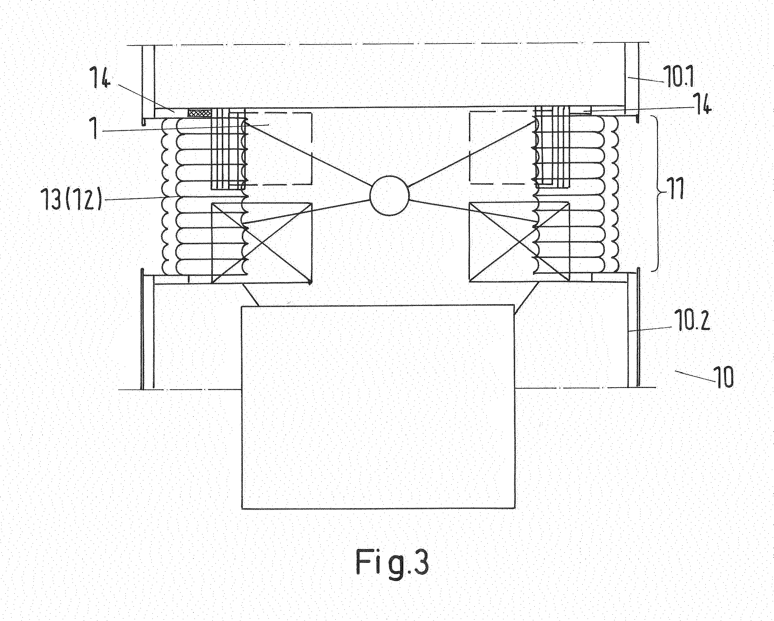

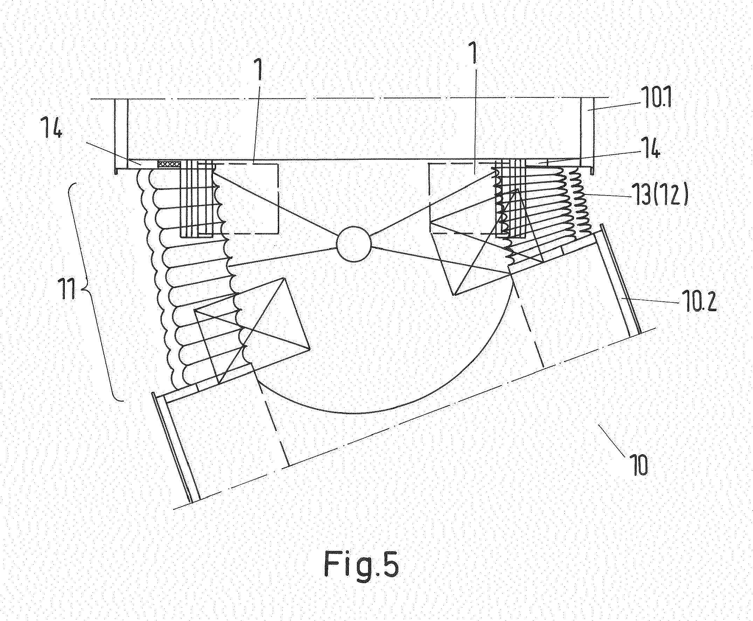

In der Fig. 1 ist ein Querschnitt durch ein Fahrzeug 10 mit einem Gelenkbereich 11 dargestellt. Die Fig. 2 zeigt einen Längsschnitt in diesem Bereich. Der Gelenkbereich befindet sich zwischen zwei Wagenkästen 10.1, 10.2 des Fahrzeuges. Im Gelenkbereich 11 wird die Fahrzeugwandstruktur 12 durch Wellenbälge 13 (strichlierte Fläche) oder ähnlichen einer Kurvenbewegung folgenden Materialien gebildet. Der Wellenbalg 13 weist einen senkrechten Wandbereich und einen schrägen Abschnitt 13a (Abdeckschürze) zur Abdeckung der für die Gelenkbewegung erforderlichen Drehscheibe auf. In diesem Bereich ist eine alternative Anordnung von Klappsitzen 1 möglich. (Fig. 3) Die Durchgangsbreite wird bei eingeklapptem Sitz nicht beeinträchtigt. Die Anordnung der Klappsitze 1 erfolgt oberhalb der Abdeckschürze des Wellenbalges. Die Montage der Klappsitze 1 erfolgt dabei an einem Endportal eines Wagenkastens, wodurch die Beweglichkeit des Gelenkes(siehe Fig. 5) gewährleistet wird. Die Anordnung ist dabei abhängig von der Gelenklänge, der Sitzbreite und Winkelstellung im kleinsten Radius (Bogenstellung des Fahrzeuges) Bei optimaler Kombination können auch mehrere Sitze pro Seite angeordnet werden.

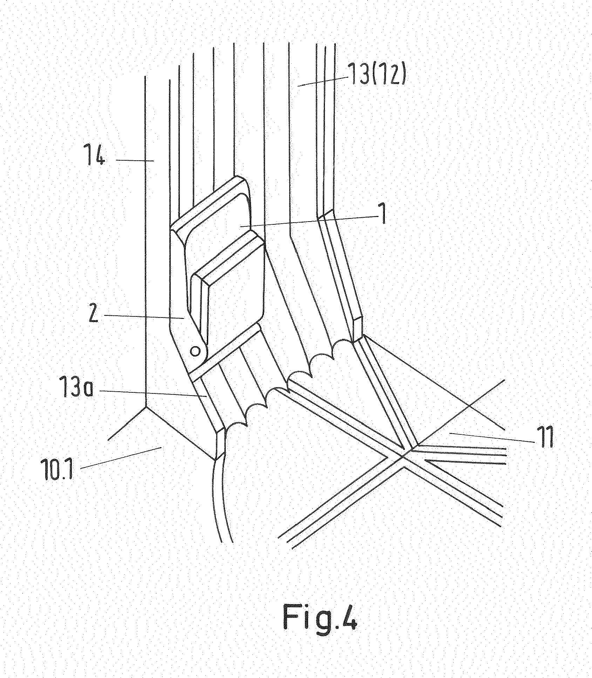

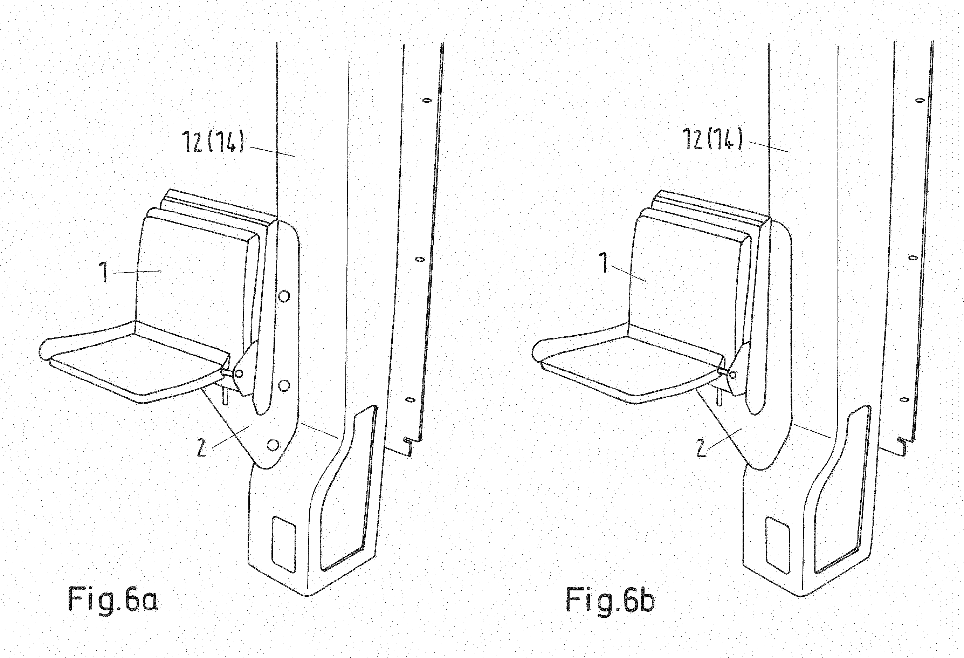

In der Fig. 4 wird der Gelenkbereich 11 und ein darin angeordneter Klappsitz 1 in einer Detailansicht des Fahrzeuges gezeigt. Der Klappsitz 1 kann direkt oder über eine Montageplatte 2 am Endportal 14 des Wagenkastens fixiert werden. Die Montageplatte ist nicht nur seitlich, sondern hinter dem Sitz angeordnet, daher kann der Sitz auch in "C-Schienen" montiert werden (Fig. 6b). Die Fixierung des Klappsitzes 1 erfolgt dabei mittels Verschraubungen, vorzugsweise einer 3-Punkt-Verschraubung oder einer Dreiecksmontage (Fig. 6a).

Der Sitz 1 wird dabei an eine Montageplatte 2 in C-Schienen oder direkt in der Montageplatte 2 montiert. Alternativ kann die Montageplatte 2 auch gleich in der Sitzschale integriert sein, d.h. das verstärkte Rückenteil der Sitzschale wird ebenfalls mittels Verschraubungen am Portal fixiert. Wichtig dabei ist die Positionierung derart, dass der Sitz im eingeklappten Zustand die freie Stehplatzfläche nicht verringert oder behindert und somit die Kapazität und freie Durchgangsbreite nicht beeinträchtigt.

In den Fig. 6a und b ist das Montageblech 2, an dem der Klappsitz 1 montiert wird, zu sehen. Das Montageblech 2 wird dabei mittels Montagepunkten an der Fahrzeugwandstruktur 12 befestigt. Vorzugsweise sind drei Montagepunkte (Fig. 6a) vorgesehen, wobei das Montageblech 2 einen Knick aufweist, der die Stabilität des Blechs und der Montagepunkte erhöht. Das Montageblech 2 selber kann an der Oberseite oder auch noch an der Unterseite noch eine zusätzliche Kantung aufweisen um die Stabilität zu erhöhen. Die Befestigung des Montagebleches über die Montagepunkte an der Fahrzeugstruktur kann auf unterschiedliche Weise erfolgen, vorzugsweise wird geschraubt, geschweißt (Fig. 6b) oder genietet.

## Patentansprüche

1. Verfahren zur optimierten Anordnung von Sitzflächen zur kapazitätsneutralen Komfortverbesserung für Passagiere in Fahrzeugen (10) mit Gelenkbereichen (11), wobei die Gelenkbereiche (11) jeweils zwischen zwei Wagenkastenteilen (10.1, 10.2) des Fahrzeuges angeordnet sind, **dadurch gekennzeichnet, dass** zur optimierten Anordnung von Sitzflächen Klappsitze (1) eingesetzt werden, die an den Seitenwänden der Gelenkbereiche (11) des Fahrzeuges (10) angeordnet werden und dabei so positioniert werden, dass die Klappsitze (1) im eingeklappten Zustand die Stehplatzfläche und die Durchgangsbreite in diesem Bereich nicht verringern.

2. Verfahren nach Anspruch 1, **dadurch gekennzeichnet, dass** die Klappsitze (1) an einem der Endportale (14) der Wagenkastenteile des Fahrzeuges (10) montiert werden.

3. Verfahren nach Anspruch 2, **dadurch gekennzeichnet, dass** die Klappsitze (1) direkt oder über eine Montageplatte (2) an einem der Endportale (14) der Wagenkästen des Fahrzeuges (10) fixiert werden.

4. Verfahren nach einem der Ansprüche 1 bis 3, **dadurch gekennzeichnet, dass** die Fixierung der Klappsitze (1) mittels Verschraubungen, vorzugsweise einer 3-Punkt-Verschraubung oder einer Dreiecksmontage erfolgt.

5. Fahrzeug zur Beförderung von Personen mit einem zwischen zwei Wagenkastenteilen (10.1, 10.2) angeordneten Gelenkbereich (11), wobei im Gelenkbereich (11) Sitze (1) vorgesehen sind, **dadurch gekennzeichnet, dass** die Sitze (1) als Klappsitze ausgebildet sind, die an den Seitenwänden der Gelenksbereiche (11) angeordnet sind und im eingeklappten Zustand die Stehplatzfläche und die Durchgangsbreite in diesem Bereich nicht verringern.

6. Fahrzeug nach Anspruch 5, **dadurch gekennzeichnet, dass** die Klappsitze (1) an einem der Endportale (14) der Wagenkastenteile (10.1, 10.2) des Fahrzeuges (10) befestigt sind.

7. Fahrzeug nach Anspruch 6, **dadurch gekennzeichnet, dass** die Klappsitze (1) direkt oder mittels einer Montageplatte (2) an einem der Endportale (14) der Wagenkästenteile (10.1, 10.2) des Fahrzeuges (10) befestigt sind.

8. Fahrzeug nach einem der Ansprüche 5 bis 7, **dadurch gekennzeichnet, dass** die Klappsitze (1) direkt oder mittels einer Montageplatte (2) mit einem der Endportale (14) der Wagenkästenteile (10.1, 10.2) des Fahrzeuges (10) verschraubt sind, vorzugsweise mittels einer 3-Punkt-Verschraubung oder einer Dreiecksmontage.

## Claims

1. A method for the optimised arrangement of seats for capacity-neutral improvement of comfort for passengers in vehicles (10) with articulated areas (11), wherein the articulated areas (11) are in each case arranged between two body parts (10.1, 10.2) of the vehicle, **characterised in that**, for optimised arrangement of seats, folding seats (1) are used, which are arranged on the side walls of the articulated areas (11) of the vehicle and are positioned such that the folding seat (1) in the folded state does not reduce the standing area or the gangway width in this area.

2. The method according to claim 1, **characterised in that** the folding seats (1) are mounted on one of the end portals (14) of the body parts of the vehicle (10).

3. The method according to either one of claims 1 or 2, **characterised in that** the folding seats (1) are fixed to one of the end portals (14) of the bodies of the vehicle (10) directly or via a mounting panel (2).

4. The method according to any one of claims 1 to 3, **characterised in that** the folding seats (1) are fixed by means of screwed connections, preferably a 3-point screwed connection or a triangle mounting.

5. A vehicle for conveying people with an articulated area (11) arranged between two bodies (10.1, 10.2), wherein seats (1) are provided in the articulated area (11), **characterised in that** the seats (1) are formed as folding seats, which are arranged on the side walls of the articulated areas (11) and in the folded state do not reduce the standing area or the gangway width in this area.

6. The vehicle according to claim 5, **characterised in that** the folding seats (1) are fastened to one of the end portals (14) of the body parts (10.1, 10.2) of the vehicle (10).

7. The vehicle according to claim 5 or 6, **characterised in that** the folding seats (1) are fastened to one of the end portals (14) of the body parts (10.1, 10.2) of the vehicle (10) directly or by means of a mounting panel (2).

8. The vehicle according to any one of claims 5 to 7, **characterised in that** the folding seats (1) are screwed to one of the end portals (14) of the body parts (10.1, 10.2) of the vehicle (10) directly or by means of a mounting panel (2), preferably by means of a 3-point screwed connection or a triangle mounting.

## Revendications

1. Procédé destiné à l'agencement optimisé de sièges pour améliorer le confort des passagers sans affecter la capacité dans des véhicules (10) avec des zones articulées (11), dans lequel les zones articulées (11) sont agencées respectivement entre deux parties de caisse (10.1, 10.2) du véhicule, **caractérisé en ce que** des sièges rabattables (1) sont utilisés pour l'agencement optimisé de sièges, lesquels sont agencés sur les parois latérales des zones articulées (11) du véhicule (10) et sont positionnés de sorte que les sièges rabattables (1) ne diminuent pas à l'état rabattu la surface de places debout et la largeur de passage dans cette zone.

2. Procédé selon la revendication 1, **caractérisé en ce que** les sièges rabattables (1) sont montés sur un des portails d'extrémité (14) des parties de caisse du véhicule (10).

3. Procédé selon la revendication 2, **caractérisé en ce que** les sièges rabattables (1) sont fixés directement ou par le biais d'une plaque de montage (2) sur un des portails d'extrémité (14) des caisses du véhicule (10).

4. Procédé selon l'une quelconque des revendications 1 à 3, **caractérisé en ce que** la fixation des sièges rabattables (1) est effectuée au moyen de vissages, de préférence d'un vissage à 3 points ou d'un montage en triangle.

5. Véhicule pour le transport de personnes avec une zone articulée (11) agencée entre deux parties de caisse (10.1, 10.2), dans lequel des sièges (1) sont prévus dans la zone articulée (11), **caractérisé en ce que** les sièges (1) sont réalisés en tant que sièges rabattables qui sont agencés sur les parois latérales des zones articulées (11) et ne diminuent pas à l'état rabattu la surface de places debout et la largeur de passage dans cette zone.

6. Véhicule selon la revendication 5, **caractérisé en ce que** les sièges rabattables (1) sont fixés sur un des portails d'extrémité (14) des parties de caisse (10.1, 10.2) du véhicule (10).

7. Véhicule selon la revendication 6, **caractérisé en ce que** les sièges rabattables (1) sont fixés directement ou au moyen d'une plaque de montage (2) sur un des portails d'extrémité (14) des parties de caisse (10.1, 10.2) du véhicule (10).

8. Véhicule selon l'une quelconque des revendications 5 à 7, **caractérisé en ce que** les sièges rabattables (1) sont vissés directement ou au moyen d'une plaque de montage (2) avec un des portails d'extrémité (14) des parties de caisse (10.1, 10.2) du véhicule (10), de préférence au moyen d'un vissage à 3 points ou d'un montage en triangle.
